# Europäisches Patentamt
## European Patent Office
### Office européen des brevets

(19)

(11) Veröffentlichungsnummer: **0 103 244**
**B1**

(12) **EUROPÄISCHE PATENTSCHRIFT**

(45) Veröffentlichungstag der Patentschrift:
**26.11.86**

(21) Anmeldenummer: **83108664.0**

(22) Anmeldetag: **02.09.83**

(51) Int. Cl.⁴: **B 31 B 1/90**

(54) Verfahren und Vorrichtung zum Herstellen eines schlauchförmigen Vorproduktes für verschliessbare Folienbeutel.

(30) Priorität: **10.09.82 US 416619**

(43) Veröffentlichungstag der Anmeldung:
**21.03.84 Patentblatt 84/12**

(45) Bekanntmachung des Hinweises auf die Patenterteilung:
**26.11.86 Patentblatt 86/48**

(84) Benannte Vertragsstaaten:
**BE CH DE FR GB LI SE**

(56) Entgegenhaltungen:
**DE-A-1 778 477**
**DE-A-2 619 437**
**DE-B-1 950 724**
**US-A-3 219 084**
**US-A-3 948 705**

(73) Patentinhaber: **MINIGRIP EUROPE GMBH,
Heilbronner Strasse 43, D-7000 Stuttgart 1 (DE)**

(72) Erfinder: **Ausnit, Steven, 124 East 61st Street, New York City N.Y. 10021 (US)**

(74) Vertreter: **Hoeger, Stellrecht & Partner,
Uhlandstrasse 14c, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zum Herstellen eines schlauchförmigen Vorproduktes für verschließbare Folienbeutel, bei denen ein Doppelverschlußband aus einem ersten Verschlußstreifen mit jeweils mindestens zwei Verschlußprofilleisten und aus einem zweiten Verschlußstreifen mit jeweils mindestens zwei Verschlußprofilleisten, die komplementär zu den jeweils zugeordneten Verschlußprofilleisten des ersten Verschlußstreifens ausgebildet und lösbar mit diesem verrastet sind, dauerhaft mit flachen, bandförmigen Folienbereichen verbunden, insbesondere verschweißt, wird, die bei den fertigen Folienbeuteln die Vorder- und Rückwand derselben bilden und bei dem das Doppelverschlußband und zumindest das Folienmaterial auf der einen Seite desselben anschließend längs der zwischen den verrasteten Verschlußleistenpaaren verlaufenden Längsmittellinie des Doppelverschlußbandes durchtrennt werden sowie eine Vorrichtung zur Durchführung des Verfahrens.

Ein derartiges Verfahren ist aus der DE-OS 26 19 437 bekannt. Bei dem bekannten Verfahren werden die bandförmigen Folienbereiche in Form von Folienstreifen für die Vorderwände der Folienbeutel einerseits und die Rückwände derselben andererseits von getrennten Vorratsrollen abgezogen, während das Doppelverschlußband von einer dritten Vorratsrolle abgezogen wird, wobei die Folienbänder und das Doppelverschlußband dann an einer Verbindungsstation derart verbunden werden, daß mit jedem der Folienbänder jeweils einer der Verschlußstreifen verschweißt wird.

Aus der US-PS 3 948 705 ist es ferner bekannt, einen extrudierten Folienschlauch flachzulegen und auf der einen Seite des Folienschlauches eine Materialbahn auszuschneiden. Im Bereich der so erzeugten Lücke wird dann mit der Innenseite des nicht aufgeschnittenen Folienstreifens ein erster Verschlußstreifen mit mindestens zwei Verschlußprofilleisten verklebt bzw. verschweißt, während mit den an die Lücke angrenzenden Rändern des Folienmaterials jeweils ein Verschlußstreifen mit mindestens einer komplementären Verschlußprofilleiste verbunden wird. Der Vorteil des bekannten Verfahrens besteht dabei darin, daß ein extrudierter Folienschlauch entweder direkt oder nach Zwischenlagerung auf einer Vorratsrolle mit den Verschlußstreifen versehen werden kann. Ein Nachteil besteht jedoch darin, daß ein bandförmiger Teil des extrudierten Folienschlauches als Abfallprodukt anfällt, was die Folienbeutel letztlich verteuert. Außerdem ist das bekannte Verfahren wegen der Notwendigkeit der getrennten Zuführung von drei verschiedenen Verschlußstreifen relativ aufwendig und teuer.

In der US-A-3,948 705 ist ferner die Möglichkeit offenbart, den flachgelegten Folienschlauch an einer einzigen Trennlinie aufzutrennen.

Andererseits macht die Erläuterung dieser Variante (Spalte 4, Zeilen 29 bis 30) aber auch deutlich, daß auch beim Erzeugen einer einzigen Trennlinie bei dem bekannten Verfahren letztlich ein relativ breiter, offener Schlitz erzeugt werden soll.

Ein derartiges Vorgehen wird gemäß den Lehren der US-A-3,948,705 ganz offenbar deshalb für erforderlich gehalten, weil dort an die Verwendung eines Doppelverschlußbandes gedacht wird, dessen einer Verschlußstreifen relativ schmal ist und durch den Schlitz hindurch vollständig in das Innere des geöffneten schlauchförmigen Materials eingelegt wird, während der andere Verschlußstreifen relativ breit ist und mit seinen äußeren Rändern von außen auf die Randbereiche des Schlitzes aufgelegt und dort befestigt wird.

Bei dem bekannten Verfahren wird also nur einer der Verschlußstreifen in den geöffneten Folienschlauch eingelegt, während der andere Verschlußstreifen die Außenseite des geöffneten Folienschlauches teilweise überlappt und von außen befestigt werden muß.

Diese Lösung läßt sich, wie oben dargelegt, auf die Weise realisieren, daß ein Streifen des Folienschlauches durch Erzeugung zweier Trennlinien herausgeschnitten wird. Diese Lösung hat den Nachteil, daß Folienmaterial verloren geht. Wenn man dagegen mit einer einzigen Trennlinie arbeitet, dann ergibt sich bei dem bekannten Verfahren das problem, daß der aufgeschnittene Folienschlauch insgesamt in dem Maße aufgeweitet werden muß, daß letztlich wieder ein offener Spalt verbleibt, der mit dem Material des breiteren der beiden Verschlußstreifen verschlossen wird. Diese Lösung führt dann zu Problemen, wenn relativ kleine Folienbeutel mit entsprechend schmalen Verschlußstreifen hergestellt werden, da es in diesem Fall schwierig ist, den Spalt für das vollständige Einlegen des schmaleren Verschlußstreifens ausreichend breit zu machen und den Spalt andererseits ausreichend schmal zu halten, um eine sichere Befestigung der Randflansche des anderen Verschlußstreifens an den Randbereichen des Spalts zu gewährleisten.

Ausgehend vom Stand der Technik liegt der Erfindung die Aufgabe zugrunde, das Verfahren der eingangs angegebenen Art dahingehend zu verbessern, daß die Herstellung eines schlauchförmigen Vorproduktes, aus dem später durch Unterteilung in Längs- und Querrichtung einzelne, gegebenenfalls zunächst noch in Form einer Kette zusammenhängende verschließbare Folienbeutel hergestellt werden können, ohne Verluste an extrudiertem Folienmaterial relativ einfach und billig durchgeführt werden kann.

Diese Aufgabe wird gemäß der Erfindung bei dem eingangs angegebenen Verfahren dadurch gelöst, daß als bandförmige Folienbereiche die Teile eines flachgelegten, extrudierten Folienschlauches verwendet werden, der längs einer einzigen, in seiner Längsrichtung verlaufenden Trennlinie aufgetrennt wird, deren Schnittkanten dann auf beiden Seiten der Trennlinie auseinandergespreizt werden, um einen offenen Schlitz zu schaffen, in den das Doppelverschlußband vollständig eingeführt wird, und daß die Schnittkanten des Folienmaterials dann an einer Stelle, die in Laufrichtung des Materials hinter der Stelle liegt, an der die Einführung des Doppelverschlußbandes erfolgt, mittels einer geeigneten Führungs- und Schließeinrichtung wieder eng zusammengeführt werden.

Erfindungsgemäß erfolgt also im Gegensatz zu dem bekannten Verfahren gemäß der US-PS 3 948 705 nur ein einfaches Auftrennen des Folienschlauches an einer einzigen Trennlinie und kein Ausschneiden eines Folienbandes zur Schaffung einer Lücke, die dann das Anbringen der einzelnen Verschlußstreifen gestattet.

Vorzugsweise wird die einzige Trennlinie erfindungsgemäß an eine der Faltkanten des flachgelegten Folienschlauches gelegt. Von der Trennlinie her wird dann das Doppelverschlußband seitlich in den Folienschlauch eingeführt und derart umgelenkt, daß das parallel zur Längsmittellinie des Folienschlauches vorzugsweise im wesentlichen auf dessen Längsmittellinie verläuft.

Eine andere vorteilhafte Möglichkeit für die Durchführung des erfindungsgemäßen Verfahrens besteht darin, daß man die einzige Trennlinie auf die eine Hauptfläche des flachgelegten Folienschlauches vorzugsweise im Bereich der Längsmittellinie desselben legt und das Doppelverschlußband dann geradlinig in den so erzeugten Schlitz einführt und mit den an den Schlitz angrenzenden Streifen des Folienmaterials verbindet.

Was die Verbindung der Verschlußleisten mit den Verschlußstreifen des Doppelverschlußbandes anbelangt, so besteht eine erste günstige Möglichkeit darin, daß man die zumindest im wesentlichen flachen Außenseiten der Verschlußstreifen auf ihrer vollen Breite mit dem Folienmaterial verbindet, insbesondere verschweißt, wobei eine großflächige sichere Verbindung geschaffen werden kann.

In anderen Fällen kann es aber auch vorteilhaft sein, wenn man die zumindest im wesentlichen flachen Außenseiten der Verschlußstreifen nur im Bereich der Längsmittellinie des Doppelverschlußbandes mit dem Folienmaterial verbindet um eine ungünstige Hebelwirkung des im Inneren des gefüllten Beutels wirksamen Drucks auf einen geschlossenen Profilleistenverschluß zu verhindern.

Die erfindungsgemässe Vorrichtung zur Durchführung des Verfahrens ist dadurch gekennzeichnet, daß ein im Betrieb teilweise in den aufzuschlitzendern Fohenschlauch eintauchendes Messer vorgesehen ist.

Vorteilhafte Ausgestaltungen der erfindungsgemässen Vorrichtung sund gegenstand der Unteransprüche.

Weitere Einzelheiten und Vorteile der Erfindung werden nachstehend anhand von Zeichnungen noch näher erläutert.

Es zeigen:

Fig. 1 einen vergrößerten Teilquerschnitt durch ein nach dem erfindungsgemäßen Verfahren hergestelltes Vorprodukt;

Fig. 2 einen der Fig. 1 entsprechenden Teilquerschnitt durch eine abgewandelte Ausführungsform eines Vorproduktes;

Fig. 3 eine schematische Darstellung zur Erläuterung eines vorbekannten Verfahrens zur Herstellung eines schlauchförmigen Vorproduktes;

Fig. 4 und Fig 5 schematische Darstellungen zur Erläuterung zweier Varianten des erfindungsgemäßen Verfahrens zur Herstellung eines schlauchförmigen Vorproduktes.

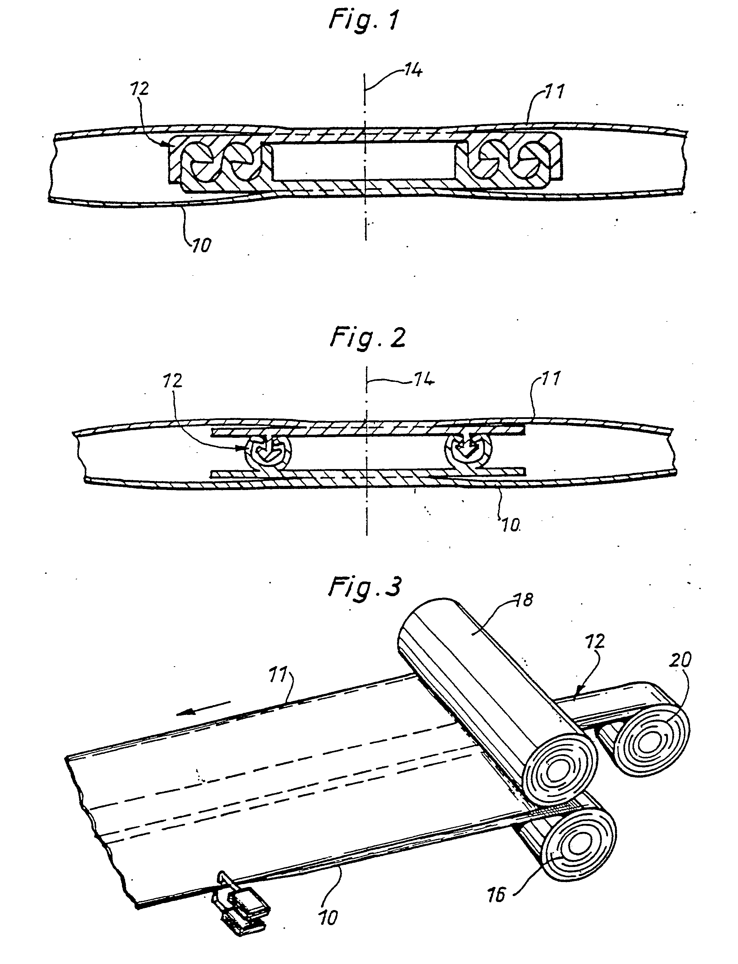

Im einzelnen zeigen Fig. 1 und 2 im wesentlichen Querschnitte durch zwei verschiedene Ausführungsformen von schlauchförmigen Vorprodukten bzw.Folienbeuteln, wobei zwischen zwei bandförmigen Folienbereichen 10,11, welche erfindungsgemäß durch die Ober- bzw. die Unterseite eines flachgelegten Folienschlauches gebildet sind, jeweils ein Doppelverschlußband 12 liegt, welches im Fall der Fig. 1 aus Verschlußstreifen mit jeweils vier Verschlußprofilleisten und im Fall der Fig. 2 aus Verschlußstreifen mit je zwei Verschlußprofilleisten besteht, wobei die Verschlußprofilleisten des oberen und des unteren Verschlußstreifens jeweils komplementär zueinander ausgebildet und miteinander verrastet sind. Die Verschlußstreifen des Doppelverschlußbandes 12 sind bei den Ausführungsbeispielen gemäß Fig. 1 und 2 in ihrem flachen mittleren Teil mit den Folienbereichen 11,12 verschweißt, während die äußeren Ränder der Verschlußstreifen nicht mit dem Folienmaterial verschweißt sind.

Ausgehend von den Anordnungen gemäß Fig. 1 und 2 erhält man nach dem Auftrennen derselben längs einer Längsmittellinie 14 jeweils zwei schlauchförmige Bänder, die beim Füllen oder vorher durch querliegende Trennschweißnähte in einzelne verschließbare Folienbeutel unterteilt werden können.

Beutelkettenbänder gemäß Fig. 1 und 2 können gemäß dem Stande der Technik, wie dies in Fig. 3 gezeigt ist (beispielsweise gemäß der DE-OS 26 19 437) in der weise hergestellt werden, daß man zwischen zwei Folienbahnen 10,11,die von Vorratsrollen 16;18 abgezogen werden, ein Doppelverschlußband 12 einführt, welches seinerseits ebenfalls von einer Vorratsrolle 20 abgezogen wird. Dabei muß jedoch der Nachteil in Kauf genommen werden, daß ein schlauchförmig extrudiertes Folienmaterial nicht direkt verarbeitet werden kann.

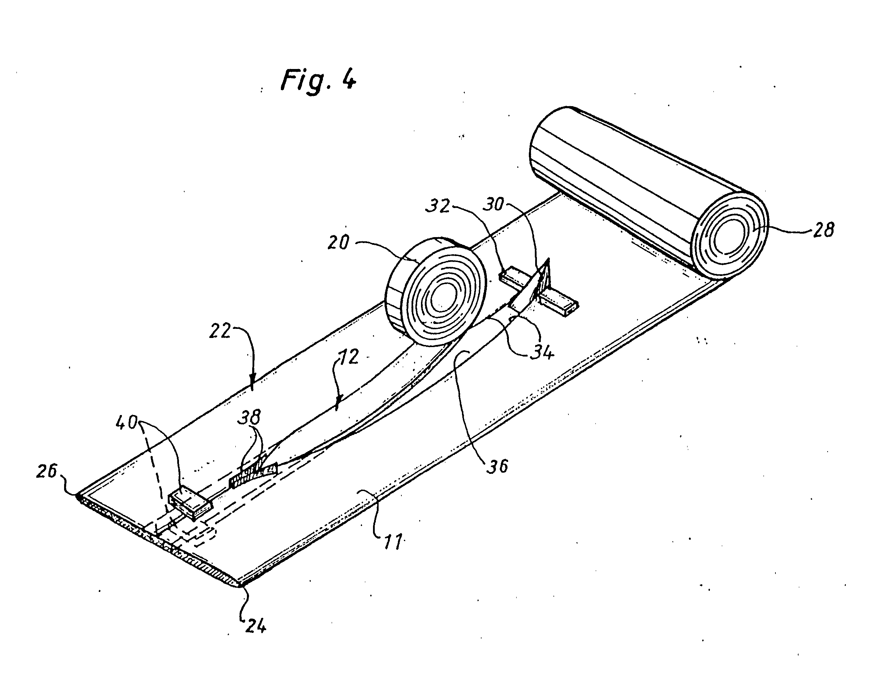

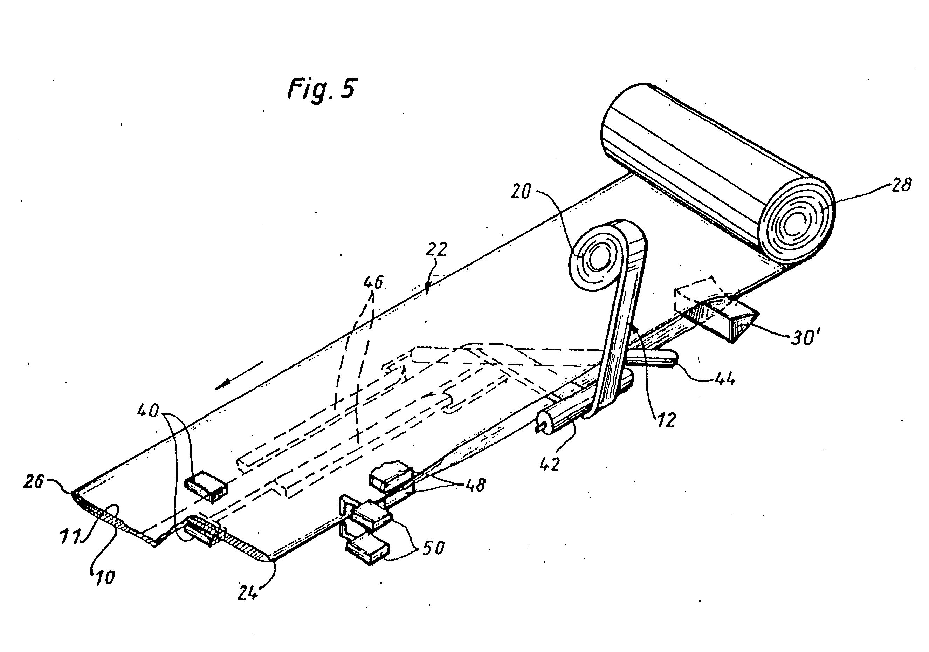

Dieser Nachteil wird durch das erfindungsgemäße Verfahren überwunden, dessen Durchführung nachstehend anhand von Fig. 4 und 5 der Zeichnung näher erläutert wird.

Im einzelnen wird gemäß Fig. 4 ein flach zusammengefalteter Folienschlauch 22 mit zwei Faltkanten 24,26 von einer Vorratsrolle 28 abgezogen. Die obere und die untere Lage des flachgelegten Folienschlauches 22 bilden dabei die bandförmigen Folienbereiche bzw. Folienbahnen 10, 11 für die Vorderwand und die Rückwand der fertigen Folienbeutel.

Erfindungsgemäß wird das Folienmaterial im Bereich des oberen Folienbandes 11 längs der Längsmittellinie des gefalteten Folienschlauches mit Hilfe eines Messers 30 aufgeschlitzt, welches von einer geeigneten, nur teilweise dargestellten Halterung 32 getragen wird. Das Messer 30 ist keilförmig ausgebildet, so daß die Schnittkanten 34 zu beiden Seiten der Trennlinie auseinandergespreizt werden, wodurch ein offener, in Längsrichtung des Folienmaterials verlaufender Schlitz 36 geschaffen wird, in den das Doppelverschlußband 12, welches von der Vorratsrolle 20 abgezogen wird, eingeführt wird. Die Kanten 34 des Folienmaterials bzw. der Folienbahn 11 werden dann an einer in Laufrichtung des Materials hinter der Stelle, an der die Zuführung des Doppelverschlußbandes 12 erfolgt, mittels einer geeigneten Führungs- und Schließeinrichtung 38 wieder zusammengeführt, so daß sie mehr oder weniger eng aneinander anstoßen. Anschließend erfolgt das Verschweißen der Außenseiten des Doppelverschlußbandes 12 mit den Innenseiten der Folienbahnen 10, 11 mittels Schweißeinrichtungen 40, die weitgehend in üblicher Weise ausgebildet sein können und in der Zeichnung nur schematisch angedeutet sind.

Bei der Ausführungsform gemäß Fig. 5 wird der Folienschlauch längs der einen Faltkante 24 mit Hilfe eines keilförmigen Messers 30' aufgeschlitzt. Das Doppelverschlußband 12 wird wieder von einer Vorratsrolle 20 abgezogen und gemäß Fig. 5 mittels Umlenkelementen 42,44 auf die Längsmittellinie des zusammengefalteten Folienschlauches 22 ausgerichtet. Die eine Umlenkeinrichtung 42 ist dabei als drehbare Rolle ausgebildet. Angrenzend an die zweite Umlenkeinrichtung 44, die beispielsweise stabförmig ausgebildet sein kann, sind ferner in Transportrichtung verlaufende Führungseinrichtungen 46 vorgesehen, welche der Zentrierung bzw. Positionierung des Doppelverschlußbandes 12 bezüglich des Folienmaterials dienen. Am ausgangsseitigen Ende der Führungseinrichtungen 46 sind weider Schweißeinrichtungen 40 vorgesehen, welche dem Verschweißen der Verschlußstreifen des Doppelverschlußbandes 12 mit dem Folienmaterial bzw. mit den Folienbändern 10,11 dienen.

Zusätzlich sind in Fig. 5 zwei weitere Führungseinrichtungen 48 gezeigt, welche die Folienbahnen 10,11 stromabwärts von der Einführstelle für das Doppelverschlußband 12 wieder zusammendrücken und hinter denen zwei Schweißeinrichtugen 50 angeordnet sind, die das Folienmaterial längs der Trennlinie wieder miteinander verschweißen.

Abweichend von dem Ausführungsbeispiel gemäß Fig. 5 kann die Trennlinie bzw. der Schlitz an der einen Faltkante des gefalteten Folienschlauches zunächst auch offen bleiben, so daß die Möglichkeit besteht, die Folienbeutel zunächst vom offenen Boden her zu füllen und dann erst zu verschweißen. Außerdem kann die Trennlinie abweichend von dem Ausführungsbeispiel gemäß Fig.5 gegenüber der Faltlinie auch etwas nach innen - entweder in den Bereich der Folienbahn 10 oder in den Bereich der Folienbahn 11 - verlegt werden, wodurch später ein Umfalten der "längeren" Beutelwand auf die "kürzere" Beutelwand ermöglicht wird, so daß die Schweißlinie am Boden des fertigen Beutels nicht direkt auf einer Kante des Beutels liegt.

Außerdem wird aus der vorstehenden Beschreibung deutlich, daß nach dem erfindungsgemäßen Verfahren schlauchförmige Bänder direkt aus einem frisch extrudierten Folienschlauch hergestellt werden können; eine Zwischenlagerung auf einer Rolle, wie sie bei den Ausführungsbeispielen vorgesehen ist, ist also entbehrlich.

**Patentansprüche**

1. Verfahren zum Herstellen eines schlauchförmigen Vorproduktes für verschließbare Folienbeutel, bei denen ein Doppelverschlußband (12) aus einem ersten Verschlußstreifen mit jeweils mindestens zwei Verschlußprofilleisten und aus einem zweiten Verschlußstreifen mit jeweils mindestens zwei Verschlußprofilleisten, die komplementär zu den jeweils zugeordneten Verschluß profil leisten des ersten Verschlußstreifens ausgebildet und lösbar mit diesen verrastet sind, dauerhaft mit flachen, bandförmigen Folienbereichen (10,11) verbunden, insbesondere verschweißt, die bei den fertigen Folienbeuteln die Vorder- und Rückwand derselben bilden, und bei dem das Doppelverschlußband (12) und zumindest das Folienmaterial auf der einen Seite desselben anschließend längs der zwischen den verrasteten Verschlußleistenpaaren verlaufenden Längsmittellinie (14) des Doppelverschlußbandes (12) durchtrennt werden, dadurch gekennzeichnet, daß als bandförmige Folienbereiche (10,11) die Teile eines flachgelegten, extrudierten Folienschlauches (22) verwendet werden, der längs einer einzigen, in seiner Längsrichtung verlaufenden Trennlinie aufgetrennt wird, deren Schnittkanten (34) dann auf beiden Seiten der Trennlinie auseinandergespreizt werden, um einen offenen Schlitz (36) zu schaffen, in den das Doppelverschlußband (12) vollständig eingeführt wird, und daß die Schnittkanten (34) des Folienmaterials (11) dann an einer Stelle, die in Laufrichtung des Materials hinter der Stelle liegt, an der die Einführung des Doppelverschlußbandes (12) erfolgt, mittels einer geeigneten Führungs- und Schließeinrichtung (38; 40) wieder eng zusammengeführt werden.

2. Verfahren nach Anspruch 1, dadurch gekennzeichnet, daß man die Trennlinie an eine der Faltkanten (24, 26) des flachgelegten Folienschlauches legt, das Doppelverschlußband (12) seitlich in den Folienschlauch (22) einführt und das Doppelverschlußband (12) dann derart umlenkt, daß es parallel zur Längsmittellinie (14) des Folienschlauches (22) verläuft (Fig. 5).

3. Verfahren nach Anspruch 1, dadurch gekennzeichnet, daß man die Trennlinie auf die eine Hauptfläche des flachgelegten Folienschlauches (22) legt und das Doppelverschlußband (12) geradlinig in den so erzeugten Schlitz (36) einführt und dann mit dem an den Schlitz angrenzenden Streifen des Folienmaterials verbindet (Fig. 4).

4. Verfahren nach einem der Ansprüche 1 bis 3, dadurch gekennzeichnet, daß man die zumindest im wesentlichen flachen Außenseiten der Verschlußstreifen auf ihrer vollen Breite mit dem Folienmaterial verbindet.

5. Verfahren nach einem der Ansprüche 1 bis 3, dadurch gekennzeichnet, daß man die zumindest im wesentlichen flachen Außenseiten der Verschlußstreifen nur im Bereich der Längsmittellinie (14) des Doppelverschlußbandes (12) mit dem Folienmaterial verbindet.

6. Vorrichtung zur Durchführung des Verfahrens nach einem der Ansprüche 1 bis 5, dadurch gekennzeichnet, daß ein im Betrieb teilweise in den aufzuschlitzenden Folienschlauch (22) eintauchendes Messer (30,30') vorgesehen ist.

7. Vorrichtung nach Anspruch 6, dadurch gekennzeichnet, daß das Messer derart angeordnet ist, daß es die eine Folienbahn (11) des flachgefalteten Folienschlauches (22) längs der Längsmittellinie (I4)des-selben durchtrennt.

8. Vorrichtung nach Anspruch 6, dadurch gekennzeichnet, daß das Messer (30') derart angeordnet ist, daß es das Folienmaterial des Folienschlauches (22) längs einer der Faltkanten (24,26) desselben durchtrennt.

9. Vorrichtung nach einem der Ansprüche 6 bis 8, dadurch gekennzeichnet, daß das Messer (30,30') als ein sich ausgehend von seiner Schneidkante nach hinten keilförmig verbreiterndes Messer ausgebildet ist.

10. Vorrichtung nach einem der Ansprüche 6 bis 9, dadurch gekennzeichnet, daß Führungseinrichtungen (42,44,46) zum Ausrichten des Doppelverschlußbandes (12) längs der Längsmittellinie (14) des aufgeschlitzten Folienschlauches (22) vorgesehen sind.

**Claims**

1. A method for producing a hose-shaped initial product for reclosable film bags, with which a double fastener tape (12) consisting of a first fastener strip with at least two fastener profiles and a second fastener strip with at least two fastener profiles, the latter being complementary in design to the associated fastener profiles of the first fastener strip and detachably interlocking therewith, is permanently secured, in particular heat-sealed, to flat, web-like film zones (10, 11) forming the front and rear walls of the finished film bags, and with which the double fastener tape (12) and at least the film material on one side thereof are subsequently severed along the longitudinal intermediate line (14) of the double fastener tape (12), said line extending between the interlocked pairs of fastener profiles, characterized in that the portions of a flattened, extruded tube of film (22) are used as web-like film zones (10, 11), said tube of film being severed along a single separation line extending in its longitudinal direction, whereupon the cut edges (34) of said line are spread apart on both sides of the separation line to create an open slot (36) and the double fastener tape (12) is inserted completely into said slot, and that the cut edges (34) of the film material (11) are then brought close together again by suitable guiding and closure means (38; 40) at a point situated, in the direction of advance of the material, downstream of the point where the double fastener tape (12) is inserted.

2. Method as defined in claim 1, characterized in that the separation line is located at one of the fold edges (24, 26) of the flattened tube of film, the double fastener tape (12) is inserted laterally into the tube of film (12) and the double fastener tape (12) is then deflected such that it extends parallel to the longitudinal intermediate line (14) of the tube of film (22) (Figure 5).

3. Method as defined in claim 1, characterized in that the separation line is located on one main surface of the flattened tube of film (22) and the double fastener tape (12) is inserted in a rectilinear manner into the slot (36) thus produced and then joined to the strips of film material adjacent the slot (Figure 4).

4. Method as defined in any of claims 1 to 3, characterized in that the at least substantially flat outer faces of the fastener strips are joined to the film material over their entire width.

5. Method as defined in any of claims 1 to 3, characterized in that the at least substantially flat outer faces of the fastener strips are joined to the film material only in the region of the longitudinal intermediate line (14) of the double fastener tape (12).

6. Apparatus for carrying out the method defined in any of claims 1 to 5, characterized in that a knife (30, 30') is provided, said knife plunging partially during operation into the tube of film (22) to be slit.

7. Apparatus as defined in claim 6, characterized in that the knife is arranged such that it severs one film web (11) of the flattened tube of film (22) along the longitudinal intermediate line (14) thereof.

8. Apparatus as defined in claim 6, characterized in that the knife (30,) is arranged such that it severs the film material of the tube of film (22) along one of the fold edges (24, 26) thereof.

9. Apparatus as defined in any of claims 6 to 8, characterized in that the knife (30, 30') is designed as a knife widening in wedge form towards the rear from its cutting edge.

10. Apparatus as defined in any of claims 6 to 9, characterized in that guide means (42, 44, 46) are provided for aligning the double fastener tape (12) along the longitudinal intermediate line (14) of the slit tube of film (22).


**Revendications**

1. Procédé pour fabriquer un avant produit tubulaire pour des sacs en feuille pouvant être fermés, suivant lequel une double bande de fermeture (12) composée d'un premier ruban de fermeture avec au moins deux profilés de fermeture et d'un second ruban de fermeture avec au moins deux profilés de fermeture, qui sont réalisés de manière complémentaire des profilés de fermeture associés du premier ruban de fermeture et sont verrouillés de manière libérable avec ceux-ci, est reliée, en particulier soudée, de manière permanente à des zones de feuille mince planes en forme de ruban (10, 11), qui forment dans les sacs en feuille finis, les parois avant et arrière de ceux-ci, et suivant lequel la double bande de fermeture (12) et au moins la matière en feuille sur un côté de celle-ci sont ensuite séparés le long de la ligne médiane longitudinale (14) s'étendant entre les paires de profilés de fermeture verrouillés, de la double bande de fermeture (12), caractérisé en ce qu'on utilise comme zones de feuille en forme de bande ou ruban (10, 11), les parties d'un tube de feuille extrudé aplati (22), qui est divisé le long d'une seule ligne de séparation s'étendant suivant sa direction longitudinale, dont les bords de coupe (34) sont alors écartés mutuellement de part et d'autre de la ligne de séparation, afin d'offrir une fente ouverte (36), dans laquelle la double bande de fermeture (12) est complètement introduite, et en ce que les bords de coupe (34) de la matière en feuille (11) sont alors à nouveau rapprochés étroitement, au moyen d'un dispositif de guidage et de fermeture approprié (38;40), en un endroit qui est situé, suivant le sens de circulation de la matière, en aval de l'endroit où a lieu l'introduction de la double bande de fermeture (12).

2. Procédé suivant la revendication 1, caractérisé en ce que la ligne de séparation est située sur un des bords pliés (24, 26) du tube de feuille aplati, la double bande de fermeture (12) est introduite latéralement dans le tube de feuille (22) et la double bande de fermeture (12) est alors déviée de telle sorte qu'elle s'étende parallèlement à la ligne médiane longitudinale (14) du tube de feuille (22) (figure 5).

3. Procédé suivant la revendication 1, caractérisé en ce que la ligne de séparation est située sur une des surfaces principales du tube de feuille aplati (22) et la double bande de fermeture (12) est introduite de manière rectiligne dans la fente (36) ainsi engendrée et ensuite elle est reliée aux rubans limitrophes de la fente, de la matière en feuille (figure 4).

4. Procédé suivant une des revendications 1 à 3, caractérisé en ce que les faces externes au moins essentiellement planes des rubans de fermeture sont reliées sur toute leur largeur à la matière en feuille.

5. Procédé suivant une des revendications 1 à 3, caractérisé en ce que les faces externes au moins essentiellement planes des rubans de fermeture sont reliées uniquement au voisinage de la ligne médiane longitudinale (14) de la double bande de fermeture (12), à la matière en feuille.

6. Dispositif pour la mise en oeuvre du procédé suivant une des revendications 1 à 5, caractérisé en ce qu'un couteau (30, 30') plongeant en fonctionnement partiellement dans le tube de feuille (22) à fendre, est prévu.

7. Dispositif suivant la revendication 6, caractérisé en ce que le couteau est agencé de telle sorte qu'il sépare l'une des bandes de feuille (11) du tube de feuille aplati (22) le long de la ligne médiane longitudinale (14) de celui-ci.

8. Dispositif suivant la revendication 6, caractérisé en ce que le couteau (30') est agencé de telle sorte qu'il sépare la matière en feuille du tube de feuille (22) le long d'un des bords pliés (24,26) de celui-ci.

9. Dispositif suivant une des revendications 6 à 8, caractérisé en ce que le couteau (30, 30') est réalisé en tant que couteau s'élargissant en forme de coin depuis son bord tranchant vers l'arrière.

10. Dispositif suivant une des revendications 6 à 9, caractérisé en ce que des dispositifs de guidage (42, 44, 46) sont prévus pour aligner la double bande de fermeture (12) le long de la ligne médiane longitudinale (14) du tube de feuille fendu (22).

## Fig. 1

## Fig. 2

## Fig. 3

*Fig. 4*

0 103 244

*Fig. 5*

0 103 244